# EUROPEAN PATENT APPLICATION

(11) **EP 3 007 051 A1**
(43) Date of publication of application: **13.04.2016**
(21) Application number: 14306602.5
(22) Date of filing: 10.10.2014
(51) Int. Cl.: G06F 3/0482, H04M 1/725, G06F 3/0488

(54) **Method for applying at least one operation on one or several objects displayed on a display interface of a device equipped with at least one microphone**

(71) Applicant: Thomson Licensing, 92130 Issy-les-Moulineaux (FR)
(72) Inventor: Henaff, Jérôme, 35576 Cesson Sévigné (FR); Humbert, Frédérique, 35576 Cesson Sévigné (FR); Drugeon-Hamon, David, 35576 Cesson Sévigné (FR); Leroy, Bertrand, 35576 Cesson Sévigné (FR)
(74) Representative: Huchet, Anne

(57) **Abstract**

Device comprising:
- a display interface (1) configured to display one or several objects (O);
- at least one microphone (8) configured to receive a voice command;
- a speech recognition module (9) in connection with the microphone (8);
- an interface configured to select at least one or several objects (O) displayed on the display interface (1);
wherein:
- the speech recognition module (9) is configured to receive a voice command;
- the interface of selection (1) is further configured to receive a gesture command;
the combination of the voice command and the gesture command defining an operation which is applied - after the reception of said gesture command - to at least one displayed object (O) selected from the displayed objects (O).

## Description

### TECHNICAL FIELD

The present disclosure generally relates to the interactions of a user with a device - such as a smartphone or a tablet - and especially to such a device equipped with speech recognition functionalities.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Mobile devices, such as smartphones or tablets, usually comprise several tools allowing users to interact with them. In particular, more and more mobile devices comprise a touch screen configured to receive input from a user's touch to be transferred to processor(s) of said mobile device. The touch on a dedicated icon and/or image triggers a corresponding action on the mobile device.

In addition, most of the mobile devices on the market are equipped with one or several microphones and a speech recognition module configured to receive and interpret a voice command. To trigger speech recognition, users have to hold down a dedicated button (such as the physical Home button in APPLE (registered trademark) smartphones or a given virtual button displayed on a touch screen). Once activated, the speech recognition module is able to identify words and phrases in spoken language - received from the user - by digitizing the sound and convert them into a machine-readable format. The converted words and phrases are then compared with stored patterns, each of them being associated with a given action. When a stored pattern matched, the corresponding voice command is applied which triggers the associated action on the mobile device (such as decrease a volume).

Nevertheless, the performance of speech recognition is random and may vary as a function of accent, pronunciation, articulation, roughness, nasality, pitch, volume, speed, etc.

To overcome this shortcoming, it is known to limit voice commands to a simple vocabulary defined by single verbs or combinations of a few words due to the fact that they have to be clearly expressed without interfering with a content. Such a solution limits the number of different actions controlled by voice commands.

More complex speech recognition systems may have a more complicated vocabulary and grammar, with the drawback of increasing the randomness of the system's performances.

The present disclosure addresses at least some of the above mentioned drawbacks.

### SUMMARY

To this end, the disclosure concerns a method for applying at least one operation on one or several objects displayed on a display interface of a device equipped with at least one microphone,
said method being remarkable in that it comprises:
- receiving a voice command; and then
- receiving a gesture command;
the combination of the voice command and the gesture command defining an operation which is applied - after the reception of said gesture command - to at least one displayed object selected from the displayed objects.

Thus, according to the present disclosure, the combination of voice and gesture commands can allow to keep a simple vocabulary and/or grammar for vocal command, decreasing the risk of wrong interpretations of voice commands while increasing the number of possible operations intended to be applied on object(s).

Then the display interface being a touch screen, said method may comprise:
- receiving a touch on the touch screen on said at least one displayed object to select it, said touch being maintained until the reception of the gesture command.

In addition, said method may comprise:
- receiving concurrent touches on the touch screen on displayed objects to select them, said touches being maintained until the reception of the gesture command.

When the display interface is a touch screen, the gesture command can be a tactile command.

In an embodiment, the reception of a touch on said at least one displayed object may trigger the activation of the microphone.

The present disclosure also concerns a device comprising:
- a display interface configured to display one or several objects;
- at least one microphone configured to receive a voice command;
- a speech recognition module in connection with the microphone;
- an interface configured to select at least one or several objects displayed on the display interface;
wherein:
- the speech recognition module is configured to receive a voice command;
- the interface of selection is further configured to receive a gesture command; the combination of the voice command and the gesture command defining an operation which is applied - after the reception of said gesture command - to at least one displayed object selected from the displayed objects.

In an embodiment, the interface of selection can be a touch screen, so that the selection of said at least one displayed object is performed by at least one touch on the touch screen maintained until the reception of the gesture command.

In addition, the interface of selection can allow a multiple selection of displayed objects by concurrently touching them.

Moreover, said gesture command can be a tactile command.

The microphone may be configured to be activated upon the selection of said at least one displayed object.

In example, said device can be a smartphone or a tablet.

The present disclosure also concerns a computer program product downloadable from a communication network and/or recorded on a medium readable by computer and/or executable by a processor, comprising program code instructions for implementing a method for applying at least one operation on one or several objects displayed on a display interface of a device equipped with at least one microphone, said method comprising:
- receiving a voice command; and then
- receiving a gesture command;
the combination of the voice command and the gesture command defining an operation which is applied - after the reception of said gesture command - to at least one displayed object selected from the displayed objects.

Besides, the present disclosure further concerns a non-transitory program storage terminal, readable by a computer, tangibly embodying a program of instructions executable by the computer to perform a method for applying at least one operation on one or several objects displayed on a display interface of a device equipped with at least one microphone, said method comprising:
said method being remarkable in that it comprises:
   - receiving a voice command; and then
   - receiving a gesture command;
the combination of the voice command and the gesture command defining an operation which is applied - after the reception of said gesture command - to at least one displayed object selected from the displayed objects.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF DRAWINGS

The disclosure will be better understood and illustrated by means of the following embodiment and execution examples, in no way limitative, with reference to the appended figures on which:
- Figure 1 illustrates an exemplary device wherein the method, according to the present disclosure, might be implemented;
- Figure 2 is a flow chart illustrating the method for applying at least one operation on one or several objects displayed on the device of Figure 1, compliant with the present disclosure.

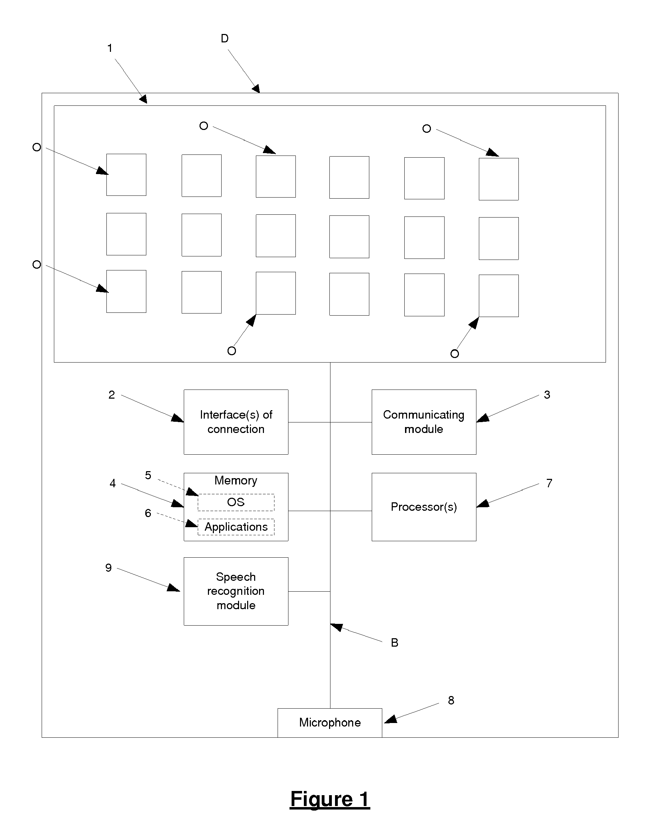

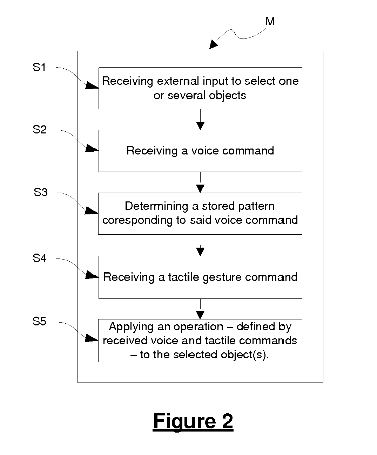

In Figures 1 and 2, some of the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION OF EMBODIMENTS

It is to be understood that the figures and descriptions of the present disclosure have been simplified to illustrate elements that are relevant for a clear understanding of the present disclosure, while eliminating, for purposes of clarity, many other elements found in typical digital terminals.

As described above, the present disclosure provides a method for applying one or several operations on one or several objects O displayed on a display interface 1 of a mobile device D (such as smartphone, a tablet, a laptop, etc.). Naturally, said method might also be implemented in a fixed terminal (e.g. a personal computer).

According to an embodiment of the present disclosure, as shown in Figure 1, the mobile device D is a smartphone, a tablet or the like, which comprises:
- one or more interfaces of connection 2 (wired and/or wireless, as for example Wi-Fi, Ethernet, etc.) to a Local Area Network (LAN) and/or Wide Area Network (WAN) as the Internet. Naturally, in a variant, the device D might be devoid of any interface of connection;
- a communication module 3 containing the protocol stacks to communicate with one or more other local or remote terminals and/or servers belonging to a local or wide area network. In particular, the communication module 3 comprises the TCP/IP stack well known in the art. Of course, it could be any other type of network and/or communicating means enabling the mobile device D to communicate with such other terminals;
- a memory 4, which is represented for clarity reasons in the form of a single block, but comprises at one and the same time random-access memory, read-only memory and reprogrammable persistent memory (of example "Flash" type);
- an operating system 5 (e.g. Apple IOS or Google Android) and applications 6, which are stored in said memory 4;
- one or more hardware processor(s) 7 (forming, for instance, a Central Processing Unit and/or a Graphic Processing Unit) for executing the applications and programs stored in the memory 4 of the device D;
- a touch-sensing interface 1 configured to receive input from a user's touch to be transferred to the processor(s) 7. In the embodiment, the display interface and the touch-sensing interface form the same element, so-called touch screen (nevertheless, in a variant, the touch screen could be a separate and standalone element connected to the device D). In addition, the touch-screen 1 is configured to recognize a user's touches and, notably, the position of such touches. In operation, the touch screen 1 detects and reports the touches to the processor(s) 7 which then interprets said touches in accordance with its programming. The touch screen 1 can rely on different technologies, such as (without any limitation) capacitive sensing, resistive sensing, pressure sensing, optical sensing, and/or the like. According to the disclosure, the touch screen 1 is preferably based on multipoint sensing in order to distinguish multiple touches that occur at the same time on said touch screen 1. In another variant, the touch-sensing interface might be substituted by a well-known physical keyboard connected to the display interface;
- one or several microphones 8. In the illustrative example of Figure 1, only one microphone is considered and represented;
- a speech recognition module 9 defined to interpret a voice command received by the microphone 8 from a user of the device D. Once activated, the speech recognition module 9 is configured to extract and identify words pronounced by a user and received by the microphone 8, in order to convert them into a machine-readable format. The converted words and phrases are then compared with patterns, each of them being associated with a given action. When a stored pattern matched, the corresponding voice command is applied which triggers the associated action (or operation) on the device D. The patterns may be already stored in the device D (e.g. in the memory 4). In a variant, said patterns may be stored in a remote server (not represented in the Figures) connected to the device D;
- an internal bus B to connect the various modules and all means well known to the skilled in the art for performing the generic device functionalities.

As described above, the method M according to the present disclosure is operative in the device D of Figure 1 for applying one or several operations on one or several objects displayed on the touch screen 1 (used as a display screen).

In particular, as illustrated in Figure 2, said method M comprises:
- receiving (step S1) an external input to select at least one object O from the objects O displayed on the touch screen 1 of the device D. In particular, such as selection can be performed by a touch (e.g. with a finger, a stylus, etc.) on a desired object O displayed on the touch screen 1. In said embodiment, the selection of the displayed object(s) triggers the activation of the microphone 8 of the device D (e.g. the microphone 8 was previously in sleep mode). In this way, only one touch on the touch screen 1 may allow both the selection of displayed object(s) and the activation of the microphone 8. In addition, the selection of several displayed objects may be obtained by concurrently touching said objects. The selection of all the objects on the touch screen 1 may be done by touching a dedicated area of the specially configured touch screen 1;
- receiving (step S2) a voice command intended to be applied to the displayed object(s) selected in step S1. In particular, since the selection of the displayed object(s) activates the microphone 8, a user simply needs to say a voice command he/she wants to be applied to the selected object(s). The microphone 8 transforms the received voice command into a signal which is sent to the speech recognition module 9;
- determining (step S3) - by the speech recognition module 9 - a pattern associated with the received voice command and comparing said determined pattern with patterns stored, for instance, in the memory 4 of the device D;
- receiving (step S4) a tactile gesture command applied by the user on the touch screen 1, which specifies and/or completes the received voice command. In other words, the voice command associated with the tactile command define an operation to be applied on the selected object(s);
- applying (step S5) an operation - defined by the received voice and tactile commands - to the selected object(s). It should be understood that the action associated with the voice command is preferably applied upon receipt of the tactile command, since the latter defines and specifies the voice command.

According to said embodiment, the touch - applied by the user on the touch screen 1 for the selection of the displayed object(s) - is maintained until the reception of a tactile command. In this way, the microphone 8, as the speech recognition module 9, is active only for the duration of the touch, saving power consumption and resources. In a variant of said embodiment, the user does not need to hold down the touch after the selection of the displayed object(s). In this variant, the touch still triggers the activation of the microphone and the speech recognition module, e.g. during a predetermined period (such as few seconds).

In an illustrative, but non-limitative example of said embodiment, the objects O correspond to preview pictures associated with movies stored, for instance, in the memory 4 of the device D. In this example, the displayed objects O may be arranged in rows and columns to form a grid. The preview pictures are sorted by the release date of associated movies (e.g. from the newest to oldest).

In said example, when the user wants to sort the preview pictures in another way, he/she may start to touch the list, say in a loud voice "Sort this way" and then make a gesture from bottom to up on the touch screen 1 and then stop to touch the list. Thus, the touch screen 1 of the device D displays the list from the oldest to the newest movies.

Moreover, when the user wants to move one movie in the list, he/she starts to touch the preview picture of the desired movie, then says in a loud voice "Move", then moves his/her finger - without releasing the touch of selection - in the direction he/she wants the movie to be moved (up, down, left, right) and then stops touching the corresponding preview picture.

Thus, the combination of voice and gesture commands can allow to keep a simple vocabulary and/or grammar for vocal command, decreasing the risk of wrong interpretations of voice commands while increasing the number of possible operations.

In a further embodiment compliant with the present disclosure, a remote control element (not represented in the Figures), such as a mouse, may be connected to the device D to allow a user to select one or several objects O displayed on the touch screen 1. It should be understood that, in this embodiment, the display screen 1 might not be tactile.

According to this further embodiment, the touch used in the previous embodiment is substituted with a click on the mouse - thanks to its associated cursor displayed on the screen 1 - on desired object(s). The click of selection may be maintained until the reception of a gesture command, as the touch of the previous embodiment.

As in the previous embodiment, after having selected one or several objects displayed on the screen 1 with the mouse cursor, a user can say a voice command and then draw a gesture command by moving said cursor.

The steps S1 and S5 of the method M, as previously described, are also implemented in said further embodiment.

Besides, the flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. Method for applying at least one operation to one or several objects (O) displayed on a display interface (1) of a device (D) equipped with at least one microphone (8),
said method (M) comprising:
- receiving (S2) a voice command; and then
- receiving (S4) a gesture command;
the combination of the voice command and the gesture command defining an operation which is applied (S5) - after the reception of said gesture command - to at least one displayed object (O) selected from the displayed objects (O).

2. Method according to claim 1, comprising, the display interface (1) being a touch screen:
- receiving (S1) a touch on the touch screen on said at least one displayed object (O) to select it, said touch being maintained until the reception of the gesture command.

3. Method according to claim 2, comprising:
- receiving (S1) concurrent touches on the touch screen on displayed objects (O) to select them, said touches being maintained until the reception of the gesture command.

4. Method according to claim 2 or 3, wherein, the display interface (1) being a touch screen, the gesture command is a tactile command.

5. Method according to any of claims 2 to 4, wherein the reception (S1) of a touch on said at least one displayed object (O) triggers the activation of the microphone (8).

6. Device comprising:
- a display interface (1) configured to display one or several objects (O);
- at least one microphone (8) configured to receive a voice command;
- a speech recognition module (9) in connection with the microphone (8);
- an interface configured to select at least one or several objects (O) displayed on the display interface (1);
wherein:
- the speech recognition module (9) is configured to receive a voice command;
- the interface of selection (1) is further configured to receive a gesture command;
the combination of the voice command and the gesture command defining an operation which is applied - after the reception of said gesture command - to at least one displayed object (O) selected from the displayed objects (O).

7. Device according to claim 6, wherein the interface of selection (1) is a touch screen, so that the selection of said at least one displayed object (O) is performed by at least one touch on the touch screen maintained until the reception of the gesture command.

8. Device according to claim 7, wherein the interface of selection (1) allows a multiple selection of displayed objects (O) by concurrently touching them.

9. Device according to claim 6 or 7, wherein said gesture command is a tactile command.

10. Device according to any of claims 6 to 9, wherein the microphone (8) is configured to be activated upon the selection of said at least one displayed object (O).

11. Device according to any of claims 7 to 10, wherein said device (D) is a smartphone or a tablet.

12. Computer program product downloadable from a communication network and/or recorded on a medium readable by computer and/or executable by a processor, comprising program code instructions for implementing a method for applying at least one operation on one or several objects (O) displayed on a display interface (1) of a device (D) equipped with at least one microphone (8),
said method (M) comprising:
- receiving (S2) a voice command; and then
- receiving (S4) a gesture command;
the combination of the voice command and the gesture command defining an operation which is applied (S5) - after the reception of said gesture command - to at least one displayed object (O) selected from the displayed objects (O).

13. Non-transitory program storage terminal, readable by a computer, tangibly embodying a program of instructions executable by the computer to perform a method for applying at least one operation on one or several objects (O) displayed on a display interface (1) of a device (D) equipped with at least one microphone (8), said method (M) comprising:
- receiving (S2) a voice command; and then
- receiving (S4) a gesture command;
the combination of the voice command and the gesture command defining an operation which is applied (S5) - after the reception of said gesture command - to at least one displayed object (O) selected from the displayed objects (O).
